# EUROPEAN PATENT APPLICATION

(11) **EP 2 966 574 A1**
(43) Date of publication of application: **13.01.2016**
(21) Application number: 14195787.8
(22) Date of filing: 02.12.2014
(51) Int. Cl.: G06F 13/40

(54) **USB hub**

(30) Priority: 08.07.2014 TW 103123448
(71) Applicant: Delta Electronics, Inc., Taoyuan Hsien 333 (TW)
(72) Inventor: Hsieh, Hung-Sheng, 320 Taoyuan County (TW)
(74) Representative: 2K Patentanwälte Blasberg Kewitz & Reichel

(57) **Abstract**

A USB hub (1) includes a main body (2), an illumination module (3), a power module (5), and at least one USB port (4). The illumination module (3) is disposed within the main body (2) for emitting a light beam, wherein the light beam is transmissible through the main body (2). The power module (5) is disposed within the main body (2) and electrically connected with the illumination module (3) for providing electric energy to the illumination module (3). The USB port (4) is installed in the main body (2). The USB port (4) includes a detecting terminal (45), and the detecting terminal (45) is electrically connected with the power module (5). The detecting terminal (45) issues a detecting signal according to a result of judging whether the USB port (4) is connected with a USB plug of an external electronic device. According to the detecting signal, the power module (5) selectively provides the electric energy to the illumination module (3) or stops providing the electric energy to the illumination module (3).

## Description

### FIELD OF THE INVENTION

The present invention relates to a USB hub, and more particularly to a USB hub with an illumination module and at least one USB port.

### BACKGROUND OF THE INVENTION

Generally, a universal serial bus (USB) interface has a universal plug and play (UPnP) function, a hot plug function and a high data transmission speed. Consequently, the USB interface becomes one of the most popular connection interfaces.

Recently, the electronic devices with USB interfaces are gradually diversified. These electronic devices are for example mobile phones, personal digital assistants (PDA), printers, mouse devices or the like. For expanding the function of the USB interface, a USB hub with plural USB ports was disclosed. Consequently, the USB plugs of plural electronic devices can be simultaneously connected to corresponding USB ports of the USB hub. In case that the USB hub is connected with a computer host, the electronic devices connected with the USB hub can exchange data with the computer host or receive electric energy from the computer host. In case that the USB hub is connected with a power adapter, the electric energy received by the power adapter (or a utility power source) may be transmitted to the electronic devices through the USB hub in order to charge the electronic devices.

Generally, the conventional USB hubs are not aesthetically pleasing. For overcoming this drawback, some USB hubs are equipped with illumination modules for providing an illuminating effect. Once the USB hub receives electric energy, the illumination module continuously emits a light beam. However, regardless of whether the USB port of the USB hub is connected with the USB plug of the electronic device or not, the illumination module continuously emits the light beam. The way of continuously emitting the light beam wastes electric energy. Moreover, if the USB hub is not disconnected from the power adapter (or the utility power source) in the night, the illumination module may continuously emit the light beam. As known, the user's sleep is usually disturbed by the light beam, especially in the night.

Therefore, there is a need of providing an improved USB hub in order to overcome the above drawbacks.

### SUMMARY OF THE INVENTION

An object of the present invention provides a USB hub with a detecting terminal for detecting whether a USB plug of an external electronic device is plugged into the USB port. According to the result of detecting whether the detecting terminal of the USB port is connected with the USB plug, the illumination module is selectively turned on or turned off. Consequently, a power-saving purpose is achieved, and the user's sleep is not disturbed by the light beam.

In accordance with an aspect of the present invention, there is provided a USB hub. The USB hub includes a main body, an illumination module, a power module, and at least one USB port. The illumination module is disposed within the main body for emitting a light beam, wherein the light beam is transmissible through the main body. The power module is disposed within the main body and electrically connected with the illumination module for providing electric energy to the illumination module. The USB port is installed in the main body. A USB plug of an external electronic device is permitted to be plugged into the USB port. The USB port includes a detecting terminal, and the detecting terminal is electrically connected with the power module. The detecting terminal issues a detecting signal according to a result of judging whether the USB port is connected with the USB plug. According to the detecting signal, the power module selectively provides the electric energy to the illumination module or stops providing the electric energy to the illumination module.

In accordance with another aspect of the present invention, there is provided a USB hub. The USB hub includes a main body, an illumination module, a power module, and at least one USB port. The illumination module is disposed within the main body for emitting a light beam, wherein the light beam is transmissible through the main body. The power module is disposed within the main body and electrically connected with the illumination module for providing electric energy to the illumination module. The USB port is installed in the main body, wherein a USB plug of an external electronic device is permitted to be plugged into the USB port. The USB port includes a detecting terminal, and the detecting terminal is electrically connected with the power module. When the USB port is connected with the USB plug, the USB plug is in contact with the detecting terminal, so that the detecting signal outputted from the detecting terminal is in an enabling state. According to the detecting signal in the enabling state, the power module provides the electric energy to the illumination module so as to enable the illumination module. When the USB port is detached from the USB plug, the detecting signal outputted from the detecting terminal is in a disabling state. According to the detecting signal in the disabling state, the power module stops providing the electric energy to the illumination module so as to disable the illumination module.

In accordance with a further aspect of the present invention, there is provided a USB hub. The USB hub includes a main body, an illumination module, a power module, and at least one USB port. The illumination module is disposed within the main body for emitting a light beam, wherein the light beam is transmissible through the main body. The power module is disposed within the main body and electrically connected with the illumination module for providing electric energy to the illumination module. The USB port is installed in the main body. A USB plug of an external electronic device is permitted to be plugged into the USB port. The USB port includes an insulation base and a detecting terminal. The detecting terminal is disposed on the insulation base and electrically connected with the power module. When the USB port is connected with the USB plug, the USB plug is in contact with the detecting terminal, so that the detecting signal outputted from the detecting terminal is in an enabling state. According to the detecting signal in the enabling state, the power module provides the electric energy to the illumination module so as to enable the illumination module. When the USB port is detached from the USB plug, the detecting signal outputted from the detecting terminal is in a disabling state. According to the detecting signal in the disabling state, the power module stops providing the electric energy to the illumination module so as to disable the illumination module.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the relationship between a USB hub and a USB plug of an external electronic device according to an embodiment of the present invention;
FIG. 2 is a schematic perspective view illustrating the inner structure of an USB port of the USB hub of FIG. 1;
FIG. 3 is a schematic perspective view illustrating the inner structure of the USB port of FIG. 2 and taken along another viewpoint;
FIG. 4 is a schematic perspective view illustrating the inner structure of the USB port of FIG. 3, in which a detecting contact part of the USB port is received in the opening of the insulation base;
FIG. 5 is a schematic functional diagram illustrating the relationship between the illumination module, the USB port and the power module of the USB hub according to the embodiment of the present invention; and
FIG. 6 is a schematic perspective view illustrating the combination of the USB port of the USB hub and a metallic cover.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

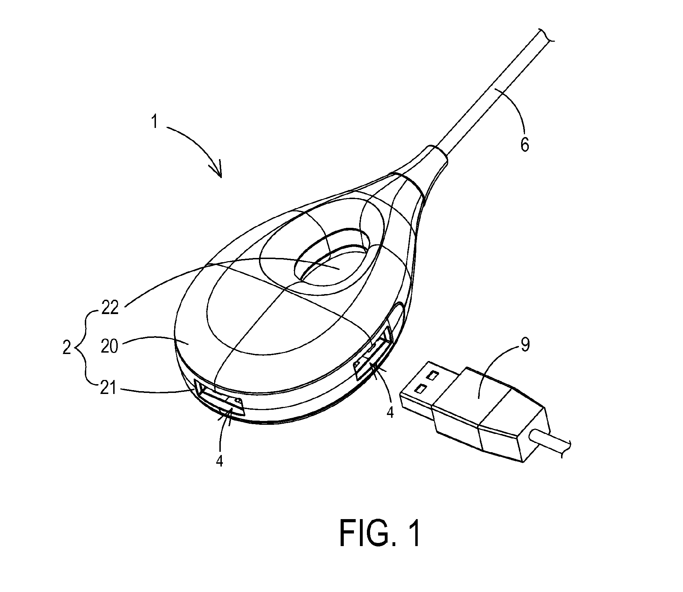

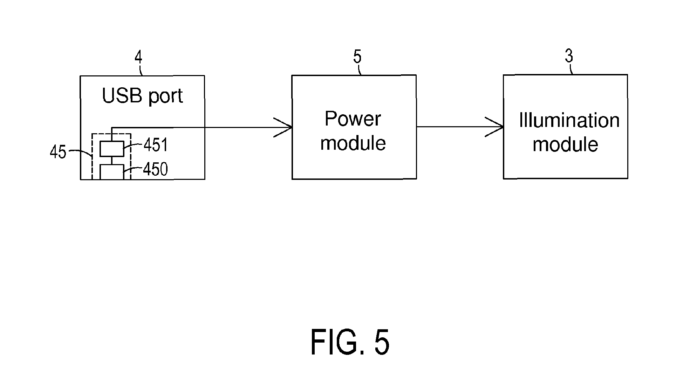

FIG. 1 schematically illustrates the relationship between a USB hub and a USB plug of an external electronic device according to an embodiment of the present invention. The USB plug 9 of an external electronic device (not shown) may be plugged into the USB hub 1 of the present invention. An example of the external electronic device includes but is not limited to a mobile phone, a personal digital assistant (PDA), a printer or a mouse device. After the USB plug 9 of the external electronic device is plugged into the USB hub 1, the external electronic device may be in communication with a computer host (not shown) to exchange data through the USB hub 1 or electrically connected with a utility power source (not shown) to receive electric energy through the USB hub 1. The USB hub 1 comprises a main body 2, an illumination module 3 (see FIG. 5), at least one USB port 4, and a power module 5 (see FIG. 5). In this embodiment, the main body 2 has a water drop shape with a specified thickness. Moreover, the main body 2 comprises a first case 20 and a second case 21. When the first case 20 and the second case 21 are combined together, an accommodation space (not shown) is defined within the main body 2.

Moreover, as shown in FIG. 1, the main body 2 further comprises a hollow portion 22. Through the hollow portion 22, the USB hub 1 can be easily held by the user. In addition, an object (not shown) may be penetrated through the hollow portion 22. Consequently, the USB hub 1 can be hung on the object.

The illumination module 3 is disposed within the main body 2. That is, the illumination module 3 is disposed within the accommodation space between the first case 20 and the second case 21. In an embodiment, the illumination module 3 comprises one or more light emitting diodes or one or more light-emitting elements. When the illumination module 3 is turned on, a light beam emitted by the illumination module 3 is projected to the outside of the main body 2 through the main body 2.

In an embodiment, the illumination module 3 is a ring-shaped light-emitting element, which is arranged beside an arch-shaped inner wall of the main body. It is noted that numerous modifications and alterations of the illumination module 3 may be made according to the practical requirements. For example, in another embodiment, the illumination module 3 may comprise plural separate arc-shaped light-emitting elements.

In an embodiment, the first case 20 and the second case 21 of the main body 2 are made of a light-transmissible material. In another embodiment, a part of the first case 20 or a part of the second case 21 is made of a transparent glass material or a plastic material. Consequently, when the illumination module 3 is turned on, the light beam emitted by the illumination module 3 can be projected to the outside the main body 2 through the main body 2.

The power module 5 is disposed within the main body 2 and electrically connected with the illumination module 3. The power module 5 may provide electric energy to the illumination module 3. An example of the power module 5 includes but is not limited to a DC-to-DC converter.

In some embodiments, the USB hub 1 further comprises a circuit board (not shown). The circuit board is disposed within the main body 2. In addition, the illumination module 3 and the power module 5 are disposed on the circuit board.

In an embodiment, each of the USB ports 4 complies with a USB2.0 specification. The USB ports 4 are installed in the main body 2. Moreover, the USB ports 4 are open to the arc-shaped lateral surfaces of the main body 2. The USB plug 9 of the external electronic device may be plugged into the corresponding USB port 4.

In an embodiment, the USB hub 1 comprises three USB ports 4. These USB ports 4 are located at a bottom side, a right side and a left side of the main body 2, respectively. It is noted that the number of the USB ports 4 and the locations of the USB ports 4 may be varied according to the practical requirements.

In an embodiment, the USB hub 1 further comprises a connecting wire 6. A first end of the connecting wire 6 is coupled with the main body 2, and electrically connected with the power module 5 and the corresponding USB port 4. A second end of the connecting wire 6 is a USB plug (not shown). The USB plug of the connecting wire 6 is connected with an AC-to-DC power adapter (not shown) or a computer host (not shown). Consequently, the electric energy from the AC-to-DC power adapter or the data from the computer host may be transmitted through the connecting wire 6.

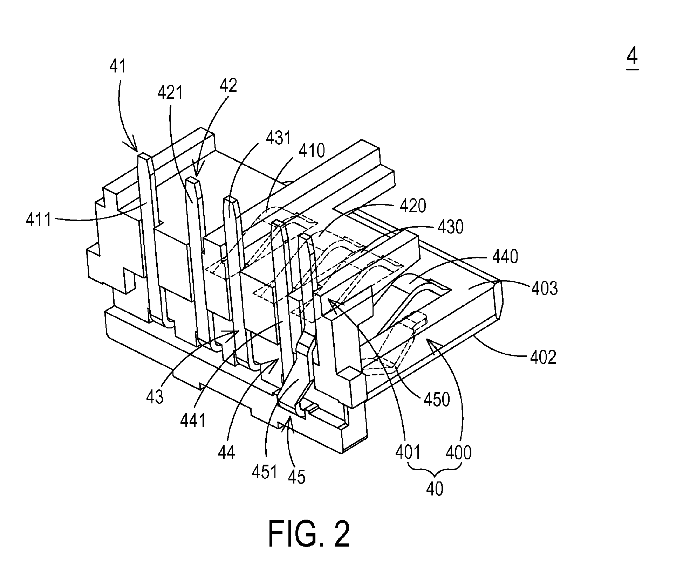

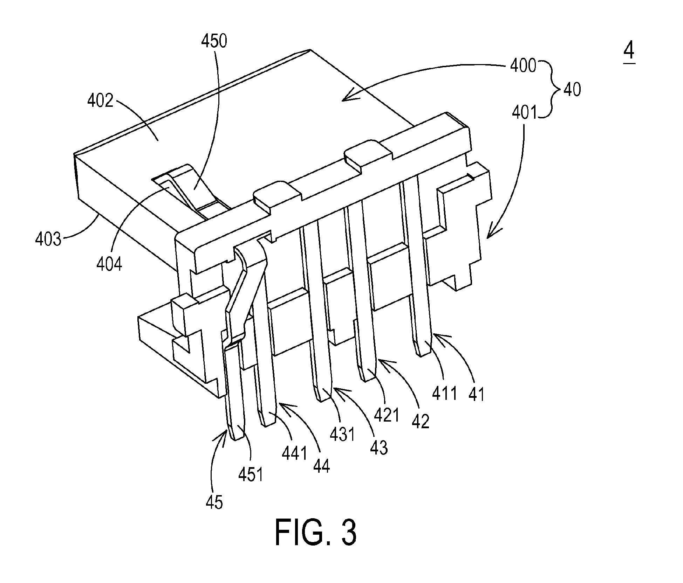

FIG. 2 is a schematic perspective view illustrating the inner structure of an USB port of the USB hub of FIG. 1. FIG. 3 is a schematic perspective view illustrating the inner structure of the USB port of FIG. 2 and taken along another viewpoint. Please refer to FIGS. 1, 2 and 3. The USB port 4 comprises an insulation base 40, a first terminal 41, a second terminal 42, a third terminal 43, a fourth terminal 44, and a detecting terminal 45. The insulation base 40 comprises a first base part 400 and a second base part 401. The first base part 400 and the second base part 401 are connected with each other. The first base part 400 has a first surface 402 and a second surface 403. The first surface 402 and the second surface 403 are opposed to each other. In addition, the first surface 402 is closer to the outside of the insulation base 40 than the second surface 403. Moreover, an opening 404 is formed in the first surface 402. It is preferred that the first base part 400 and the second base part 401 are integrally formed with each other. In this embodiment, the second base part 401 is L-shaped. Moreover, a portion of the second base part 401 is in parallel with the first base part 400, and separated from the first base part 400 by a specified gap.

The first terminal 41 comprises a first contact part 410 and a first pin 411. The second terminal 42 comprises a second contact part 420 and a second pin 421. The third terminal 43 comprises a third contact part 430 and a third pin 431. The fourth terminal 44 comprises a fourth contact part 440 and a fourth pin 441. The first contact part 410, the second contact part 420, the third contact part 430 and the fourth contact part 440 are disposed on the second surface 403 of the first base part 400. The first pin 411, the second pin 421, the third pin 431 and the fourth pin 441 are disposed on the second base part 401 and partially protruded from the second base part 401. Moreover, the first pin 411, the second pin 421, the third pin 431 and the fourth pin 441 are substantially perpendicular to the first contact part 410, the second contact part 420, the third contact part 430 and the fourth contact part 440, respectively.

In case that the USB port 4 complies with the USB2.0 specification, the first terminal 41 is a positive power terminal, the second terminal 42 is a negative signal terminal, the third terminal 43 is a positive signal terminal, and the fourth terminal 44 is a negative power terminal.

The detecting terminal 45 is electrically connected with the power module 5 (see FIG. 5). The detecting terminal 45 is also installed on the insulation base 40. According to a result of detecting whether the USB port 4 is connected with the USB plug 9, the detecting terminal 45 issues a detecting signal. According to the detecting signal, the power module 5 selectively provides the electric energy to the illumination module 3 to enable the illumination module 3 or stops providing the electric energy to the illumination module 3 to disable the illumination module 3.

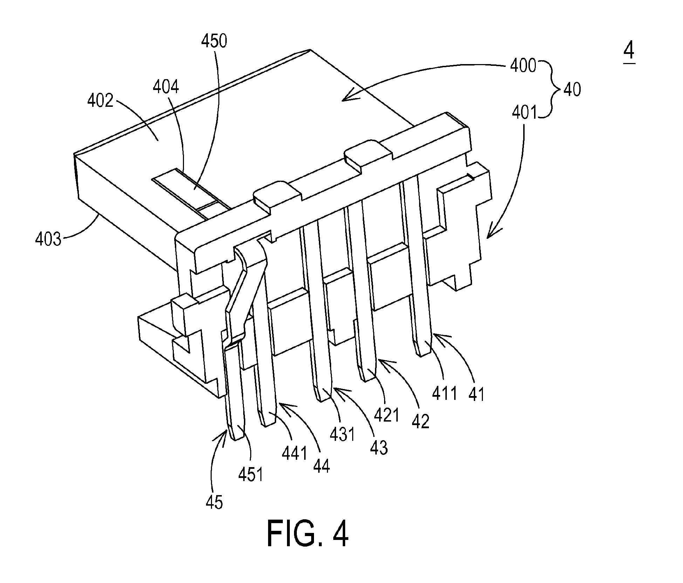

FIG. 4 is a schematic perspective view illustrating the inner structure of the USB port of FIG. 3, in which a detecting contact part of the USB port is received in the opening of the insulation base. Please refer to FIGS. 2, 3 and 4. The detecting terminal 45 comprises a detecting contact part 450 and a detecting pin 451. The detecting pin 451 is electrically connected with the power module 5 (see FIG. 5). Moreover, the detecting pin 451 is disposed on the second base part 401 and partially protruded from the second base part 401. Moreover, the detecting pin 451 is substantially perpendicular to the detecting contact part 450. The detecting contact part 450 is an elastic bent structure, and disposed on the first surface 402 of the first base part 400. The two opposite ends of the detecting contact part 450 are disposed within the opening 404. A bent section of the detecting contact part 450 is protruded from the opening 404 and the first surface 402 (see FIG. 3). When the USB plug 9 is plugged into the USB port 4, the USB plug 9 is in contact with the bent section of the detecting contact part 450. Consequently, the bent section of the detecting contact part 450 is temporarily received within the opening 404 (see FIG. 4). Moreover, since the USB plug 9 is in contact with the bent section of the detecting contact part 450, the detecting signal outputted from the detecting pin 451 of the detecting terminal 45 to the power module 5 is in an enabling state. In case that the USB plug 9 is detached from the USB port 4, the bent section of the detecting contact part 450 is protruded from the opening 404 and the first surface 402 in response to the restoring force of the detecting contact part 450 (see FIG. 3). Since the detecting contact part 450 is no longer in contact with the USB plug 9, the detecting signal outputted from the detecting pin 451 of the detecting terminal 45 to the power module 5 is in a disabling state.

In this embodiment, the detecting terminal 45 is arranged beside the fourth terminal 44. In addition, the detecting terminal 45 is closer to the left side of the insulation base 40 than the fourth terminal 44. Moreover, a part of the detecting pin 451 is disposed over and separated from the fourth pin 441 of the fourth terminal 44. That is, the detecting terminal 45 is isolated from the fourth terminal 44. Moreover, all of the first terminal 41, the second terminal 42, the third terminal 43, the fourth terminal 44 and the detecting terminal 45 are made of a metallic material.

FIG. 5 is a schematic functional diagram illustrating the relationship between the illumination module, the USB port and the power module of the USB hub according to the embodiment of the present invention. Please refer to FIGS. 1∼5. The detecting pin 451 of the detecting terminal 45 of the USB port 4 is connected with the power module 5. The power module 5 is further connected with the illumination module 3. Moreover, the USB hub 1 receives the electric energy from a power source (not shown) through the connecting wire 6. In case that the USB plug 9 is plugged into the USB port 4, the USB plug 9 is in contact with the bent section of the detecting contact part 450 of the detecting terminal 45. Meanwhile, the detecting signal outputted from the detecting pin 451 of the detecting terminal 45 to the power module 5 is in the enabling state. According to the detecting signal in the enabling state, the power module 5 provides the electric energy to the illumination module 3 so as to enable the illumination module 3. In case that the USB plug 9 is detached from the USB port 4, the bent section of the detecting contact part 450 of the detecting terminal 45 is no longer in contact with the USB plug 9. Meanwhile, the detecting signal outputted from the detecting pin 451 of the detecting terminal 45 to the power module 5 is in the disabling state. According to the detecting signal in the disabling state, the power module 5 stops providing the electric energy to the illumination module 3 so as to disable the illumination module 3. That is, according to the result of detecting whether the detecting terminal 45 of the USB port 4 of the USB hub 1 is connected with the USB plug 9 of the external electronic device, the illumination module 3 is selectively turned on or turned off. Consequently, the user can realize whether the USB port 4 of the USB hub 1 is connected with the USB plug 9 of the external electronic device according to the on/off states of the illumination module 3. Moreover, when the USB plug 9 is detached from the USB port 4, the illumination module 3 is turned off. Consequently, a power-saving purpose is achieved, and the user's sleep is not disturbed by the light beam.

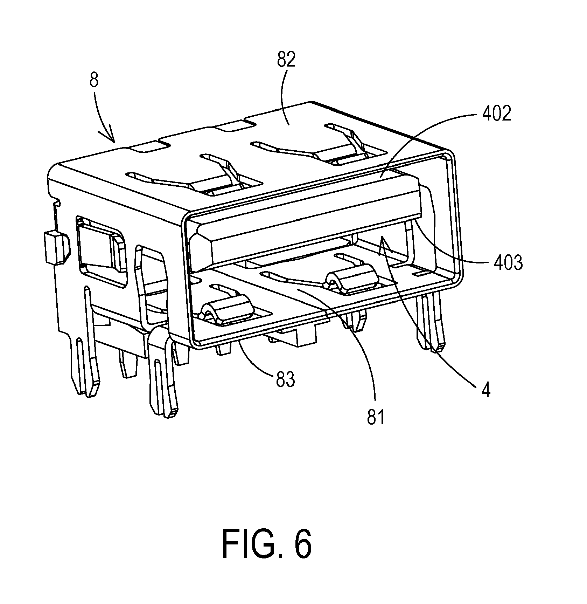

FIG. 6 is a schematic perspective view illustrating the combination of the USB port of the USB hub and a metallic cover. As shown in FIG. 6, the USB port 4 of the USB hub 1 is connected with a metallic cover 8. The metallic cover 8 comprises a receiving part 81. The receiving part 81 is used for accommodating the USB port 4. When the USB port 4 is accommodated within the receiving part 81, the first surface 402 of the first base part 400 of the insulation base 40 is arranged beside a first lateral wall 82 of the metallic cover 8 and separated from the first lateral wall 82 by a specified gap. Moreover, the second surface 403 of the first base part 400 of the insulation base 40 is separated from a second lateral wall 83 of the metallic cover 8 by another gap. Consequently, when the USB plug 9 of the external electronic device is plugged into the USB port 4, a first part of the USB plug 9 is partially accommodated within the space between the first surface 402 and the first lateral wall 82 and a second part of the USB plug 9 is partially accommodated within the space between the second surface 403 and the second lateral wall 83.

From the above descriptions, the present invention provides a USB hub. The USB hub comprises an illumination module, at least one USB port and a power module. The USB port has a detecting terminal for detecting whether a USB plug of an external electronic device is plugged into the USB port. According to the result of detecting whether the detecting terminal of the USB port is connected with the USB plug, the illumination module is selectively turned on or turned off. Consequently, the user can realize whether the USB port of the USB hub is connected with the USB plug of the external electronic device according to the on/off states of the illumination module. Moreover, when the USB plug is detached from the USB port, the illumination module is turned off. Consequently, a power-saving purpose is achieved, and the user's sleep is not disturbed by the light beam.

## Claims

1. A USB hub (1), comprising:
a main body (2);
an illumination module (3) disposed within the main body (2) for emitting a light beam, wherein the light beam is transmissible through the main body (2);
a power module (5) disposed within the main body (2) and electrically connected with the illumination module (3) for providing electric energy to the illumination module (3); and
at least one USB port (4) installed in the main body (2), wherein a USB plug of an external electronic device is permitted to be plugged into the USB port (4), wherein the USB port (4) comprises a detecting terminal (45), and the detecting terminal (45) is electrically connected with the power module (5), wherein the detecting terminal (45) issues a detecting signal according to a result of judging whether the USB port (4) is connected with the USB plug, wherein according to the detecting signal, the power module (5) selectively provides the electric energy to the illumination module (3) or stops providing the electric energy to the illumination module (3).

2. The USB hub according to claim 1, wherein the main body (2) has a water drop shape with a specified thickness and comprises a hollow portion (22), wherein the at least one USB port (4) comprises a plurality of USB ports (4), and the USB ports (4) are open to arc-shaped lateral surfaces of the main body (2).

3. The USB hub according to claim 1 or 2, wherein the USB port (4) complies with a USB2.0 specification.

4. The USB hub according to one of the preceding claims, wherein the USB port (4) comprises:
an insulation base (40); and
the detecting terminal (45) disposed on the insulation base (40), wherein when the USB port (4) is connected with the USB plug, the USB plug is in contact with the detecting terminal (45), so that the detecting signal outputted from the detecting terminal (45) is in an enabling state, wherein according to the detecting signal in the enabling state, the power module (5) provides the electric energy to the illumination module (3) so as to enable the illumination module (3), wherein when the USB port (4) is detached from the USB plug, the detecting signal outputted from the detecting terminal (45) is in a disabling state, wherein according to the detecting signal in the disabling state, the power module (5) stops providing the electric energy to the illumination module (3) so as to disable the illumination module (3).

5. The USB hub according to claim 4, wherein the insulation base (40) comprises a first base part (400) and a second base part (401), and the first base part (400) and the second base part (401) are connected with each other, wherein the first base part (400) has a first surface (402) and a second surface (403), wherein the first surface (402) and the second surface (403) are opposed to each other, and the first surface (402) is closer to an outside of the insulation base (40) than the second surface (403), wherein an opening (404) is formed in the first surface (402).

6. The USB hub according to claim 5, wherein the detecting terminal (45) further comprises a detecting contact part (450), wherein the detecting contact part (450) is an elastic bent structure, and disposed on the first surface (402) of the first base part (400), wherein two opposite ends of the detecting contact part (450) are disposed within the opening (404), and a bent section of the detecting contact part (450) is protruded from the opening (404) and the first surface (402) of the first base part (400), wherein when the USB plug is plugged into the USB ports (4), the USB plug is in contact with the bent section of the detecting contact part (450), so that the detecting signal outputted from the detecting terminal (45) is in the enabling state.

7. The USB hub according to claim 6, wherein the detecting terminal (45) further comprises a detecting pin (451), which is connected with the detecting contact part (450), wherein the detecting pin (451) is electrically connected with the power module (5), disposed on the second base part (401) and partially protruded from the second base part (401).

8. The USB hub according to claim 7, wherein the USB port (4) further comprises a first terminal (41), a second terminal (42), a third terminal (43) and a fourth terminal (44), wherein the first terminal (41) is a positive power terminal, the second terminal (42) is a negative signal terminal, the third terminal (43) is a positive signal terminal, and the fourth terminal (44) is a negative power terminal.

9. The USB hub according to claim 8, wherein the detecting pin (451) is arranged beside the fourth terminal (44), the detecting terminal (45) is closer to one side of the insulation base (40) than the fourth terminal (44), and a part of the detecting pin (451) of the detecting terminal (45) is disposed over and separated from the fourth terminal (44).

10. A USB hub (1), comprising:
a main body (2);
an illumination module (3) disposed within the main body (2) for emitting a light beam, wherein the light beam is transmissible through the main body (2);
a power module (5) disposed within the main body (2) and electrically connected with the illumination module (3) for providing electric energy to the illumination module (3); and
at least one USB port (4) installed in the main body (2), wherein a USB plug of an external electronic device is permitted to be plugged into the USB port (4), wherein the USB port (4) comprises a detecting terminal (45), and the detecting terminal (45) is electrically connected with the power module (5),
wherein when the USB port (4) is connected with the USB plug, the USB plug is in contact with the detecting terminal (45), so that the detecting signal outputted from the detecting terminal (45) is in an enabling state, wherein according to the detecting signal in the enabling state, the power module (5) provides the electric energy to the illumination module (3) so as to enable the illumination module (3), wherein when the USB port (4) is detached from the USB plug, the detecting signal outputted from the detecting terminal (45) is in a disabling state, wherein according to the detecting signal in the disabling state, the power module (5) stops providing the electric energy to the illumination module (3) so as to disable the illumination module (3).

11. The USB hub according to claim 10, wherein the USB port (4) comprises an insulation base (40), and the detecting terminal (45) is disposed on the insulation base (40), wherein the insulation base (40) comprises a first base part (400) and a second base part (401), and the first base part (400) and the second base part (401) are connected with each other, wherein the first base part (400) has a first surface (402) and a second surface (403), wherein the first surface (402) and the second surface (403) are opposed to each other, and the first surface (402) is closer to an outside of the insulation base (40) than the second surface (403), wherein an opening (404) is formed in the first surface (402).

12. The USB hub according to claim 11, wherein the detecting terminal (45) further comprises a detecting contact part (450), wherein the detecting contact part (450) is an elastic bent structure, and disposed on the first surface (402) of the first base part (400), wherein two opposite ends of the detecting contact part (450) are disposed within the opening (404), and a bent section of the detecting contact part (450) is protruded from the opening (404) and the first surface (402) of the first base part (400), wherein when the USB plug is plugged into the USB ports (4), the USB plug is in contact with the bent section of the detecting contact part (450), so that the detecting signal outputted from the detecting terminal (45) is in the enabling state.

13. A USB hub (1), comprising:
a main body (2);
an illumination module (3) disposed within the main body (2) for emitting a light beam, wherein the light beam is transmissible through the main body (2);
a power module (5) disposed within the main body (2) and electrically connected with the illumination module (3) for providing electric energy to the illumination module (3); and
at least one USB port (4) installed in the main body (2), wherein a USB plug of an external electronic device is permitted to be plugged into the USB port (4), wherein the USB port (4) comprises:
an insulation base (40); and
a detecting terminal (45) disposed on the insulation base (40) and electrically connected with the power module (5), wherein when the USB port (4) is connected with the USB plug, the USB plug is in contact with the detecting terminal (45), so that the detecting signal outputted from the detecting terminal (45) is in an enabling state, wherein according to the detecting signal in the enabling state, the power module (5) provides the electric energy to the illumination module (3) so as to enable the illumination module (3), wherein when the USB port (4) is detached from the USB plug, the detecting signal outputted from the detecting terminal (45) is in a disabling state, wherein according to the detecting signal in the disabling state, the power module (5) stops providing the electric energy to the illumination module (3) so as to disable the illumination module (3).

14. The USB hub according to claim 13, wherein the insulation base (40) comprises a first base part (400) and a second base part (401), and the first base part (400) and the second base part (401) are connected with each other, wherein the first base part (400) has a first surface (402) and a second surface (403), wherein the first surface (402) and the second surface (403) are opposed to each other, and the first surface (402) is closer to an outside of the insulation base (40) than the second surface (403), wherein an opening (404) is formed in the first surface (402).

15. The USB hub according to claim 14, wherein the detecting terminal (45) further comprises a detecting contact part (450), wherein the detecting contact part (450) is an elastic bent structure, and disposed on the first surface (402) of the first base part (400), wherein two opposite ends of the detecting contact part (450) are disposed within the opening (404), and a bent section of the detecting contact part (450) is protruded from the opening (404) and the first surface (402) of the first base part (400), wherein when the USB plug is plugged into the USB ports (4), the USB plug is in contact with the bent section of the detecting contact part (450), so that the detecting signal outputted from the detecting terminal (45) is in the enabling state.
